# EUROPÄISCHE PATENTSCHRIFT

(11) **EP 0 470 046 B1**
(45) Veröffentlichungstag und Bekanntmachung des Hinweises auf die Patenterteilung: **23.02.1994**
(21) Anmeldenummer: 91810572.7
(22) Anmeldetag: 15.07.1991
(51) Int. Cl.: B23Q 11/00

(54) **Bohr- oder Meisselgerät mit Absaugvorrichtung**
Drilling device with suction cleaner
Perceuse munie d'un aspirateur

(30) Priorität: 28.07.1990 DE 4024022
(43) Veröffentlichungstag der Anmeldung: 05.02.1992
(73) Patentinhaber: HILTI Aktiengesellschaft, 9494 Schaan (LI)
(72) Erfinder: Klüber, Wilhelm, W-8901 Königsbrunn (DE); Brix, Peter, W-8122 Penzberg (DE); Gantner, Gebhard, A-6710 Nenzing (AT); Dietrich, Max, FL-9494 Schaan (LI)
(74) Vertreter: Wildi, Roland

(56) Entgegenhaltungen:
- DE-A- 2 741 536
- DE-A- 2 741 536
- DE-A- 2 925 908
- DE-A- 3 018 197
- DE-A- 3 516 099
- DE-B- 1 210 376
- DE-B- 2 233 125

## Beschreibung

Die Erfindung betrifft ein handgeführtes Bohr- oder Meisselgerät mit Antriebsmotor sowie mit Absaugeinrichtung für das Bohrklein mit Saugkopf, Saugleitung, Sauggebläserad und Abscheideeinrichtung, wobei die Absaugeinrichtung als Baueinheit ausgebildet ist und mit dem Gerät lösbar verbunden ist.

Bei der Bearbeitung von Beton, Gestein und dgl. entsteht Bohrklein, das neben Staub auch erheblich Schmutz verursacht. Speziell bei Arbeiten in Wohnräumen oder in Bereichen, wie es sie in der Lebensmittel- oder auch Elektronikindustrie gibt, ist eine starke Verschmutzung nicht zulässig.

Aus diesem Grund muss das Bohrklein abgesaugt werden. Eine dazu notwendige Absaugeinrichtung kann entweder extern angeordnet sein oder sie kann einen integrierten Bestandteil eines Bohr- oder Meisselgerätes darstellen.

Bei der externen Ausführung handelt es sich in der Regel um ein gesondertes, vom Gerät entferntes Sauggerät mit einer beweglichen Saugleitung, die im Bereich der Bohr- oder Meisselspitze anordbar ist.

Bei der integrierten Ausführung handelt es sich, wie aus der DE-OS 27 05 388 bekannt ist, um eine Vorrichtung am Gerät zum Absaugen des Bohrkleins. Diese besteht aus einer Saugleitung, welche in ein Sauggebläse mündet, das ein auf der Motorwelle des Antriebsmotors des Gerätes sitzendes Sauggebläserad aufweist und einer Abscheideeinrichtung für das Bohrklein vor dem Sauggebläserad.

Die zum Teil voluminös gestalteten Elemente der Absaugvorrichtung sind fest mit dem Gehäuse des Gerätes verbunden. Das Sauggebläserad ist direkt auf die Antriebswelle des Antriebsmotors des Gerätes aufgeflanscht und wird von dieser angetrieben.

Ein solches Gerät weist den Nachteil auf, dass die angebauten Teile nicht nur schwer sind, sondern auch eine Unhandlichkeit des Gerätes bewirken. Da die ganzen Elemente der Absaugeinrichtung einen integrierten Bestandteil des Gerätes darstellen, ist auch die Herstellung bzw die Anschaffung sehr teuer. Der Einsatz eines solchen Gerätes für normale Bohr- oder Meisselarbeiten ist zudem ungeeignet, da das Fassungsvermögen der Abscheideeinrichtung sehr beschränkt ist.

Aus der DE-OS 27 41 536 is ein Bohrgerät mit gesondert anbaubarer Absaugeinrichtung bekannt. Diese Absaugeinrichtung weist einen Saugkopf, eine Saugleitung, eine Abscheideeinrichtung, ein Sauggebläserad sowie einen Antriebsmotor für das Sauggebläserad auf.

Das aus der DE-OS 30 18 197 bekannte Bohrgerät weist eine Absaugeinrichtung auf, die mit einer externen Abscheideeinrichtung versehen ist. Damit handelt es sich um ein mit den eingangs genannten Nachteilen hinsichtlich Handlichkeit behaftetes Bohrgerät. So wird die Handlichkeit insbesondere durch den aufwendigen Verbindungsschlauch zwischen der externen Abscheideeinrichtung und dem Bohrgerät behindert, wobei darüber hinaus in der Nähe des Einsatzortes des Bohrgerätes Platz für die Deponierung der Abscheideeinrichtung zur Verfügung stehen muss, was beispielsweise beim Einsatz an schwer zugänglichen Orten wie auf Dächern und dgl. problematisch sein kann.

Aus der DE-B-2 233 125 ist ein Gerät gemäss dem Oberbriff des Anspruchs 1 bekannt, bei dem die Welle des Sauggebläserades mit dem Antriebsmotor u.a. über ein Reibrad und dem Bohrfutter verbunden ist.

Der Erfindung liegt die Aufgabe zugrunde, ein Bohr- oder Meisselgerät zu schaffen, das einerseits eine gute Absaugung des Bohrkleins ermöglicht und andererseits eine hohe Flexibilität und Wirtschaftlichkeit des Gerätes gewährleistet.

Die Aufgabe wird erfindungsgemäss dadurch gelöst, dass das Sauggebläserad der Absaugeinrichtung zur Koppelung mit dem Antriebsmotor eine mit der Antriebswelle des Antriebsmotors direkt koppelbare Welle aufweist, wobei die Welle vom Sauggebläserad und die Antriebswelle des Antriebsmotors zueinander koaxial angeordnet sind.

Bezogen auf die geschilderte Problematik wird auf diese Weise ein vielseitig einsetzbares Bohr- oder Meisselgerät erreicht. Mit einem einzigen Gerät kann im Bedarfsfall eine Bearbeitung mit Absaugeinrichtung durchgeführt werden und andererseits ohne Absaugeinrichtung eine Bearbeitung unter normalen Bedingungen erfolgen. Der Anwender kann somit ein Grundgerät preisgünstig kaufen, das bei Bedarf mit einer Absaugeinrichtung in Form eines Zubehörteiles nachgerüstet werden kann.

Unabhängig davon, ob eine Ueber- bzw Untersetzung der Drehzahlen des Antriebsmotors stattfindet, ist grundsätzlich der Vorteil darin zu sehen, dass für den Antrieb des Sauggebläserades kein zusätzlicher Motor notwendig ist. Dadurch wird die Herstellung der Baueinheit wirtschaftlicher und das Gewicht des gesamten Gerätes kleiner.

Um eine optimale und auch direkte Uebersetzung des Sauggebläserades mit dem Antriebsmotor zu erreichen, sind die Wellen von Sauggebläserad und Antriebsmotor zueinander koaxial angeordnet. Dadurch ist eine Koppelung der Wellen mittels einer Steck- oder auch einer magnetischen Kupplung möglich. Bei dieser koaxialen Anordnung dreht sich das Sauggebläserad immer gleich schnell wie der Antriebsmotor des Gerätes.

Vorzugsweise ist die Welle des Sauggebläserades axial verschiebbar. Beim Befestigen der Baueinheit an dem Bohr- oder Meisselgerät soll eine Koppelung der Antriebswelle des Antriebsmotors mit der Welle des Sauggebläserades erreicht werden. Zu diesem Zweck können an der Stirnseite als Kupplungsklauen wirkende Vorsprünge und Vertiefungen vorgesehen sein, die durch ein axiales Verschieben der Welle des Sauggebläserades formschlüssig miteinander verbunden werden.

Um die der Koppelung dienende axiale Verschiebbarkeit der Antriebswelle des Sauggebläserades nicht manuell durchführen zu müssen, ist es vorteilhaft ein treibendes bzw krafterzeugendes Element vorzusehen. Das kann in Form einer magnetischen Einrichtung, eines Federelementes oder mittels eines von der Maschine selbst erzeugten Luftpolsters geschehen. Falls beim Befestigen der Baueinheit am Gerät die Lage der Koppelungselemente zueinander nicht stimmen, wird die Welle des Sauggebläserades von der Antriebswelle des Antriebsmotors in axialer Richtung gegen die Kraft einer Feder weggedrückt. Eine automatische formschlüssige Verbindung beider. Welle erfolgt nach dem Einschalten des Gerätes.

Die Erfindung wird anhand von Zeichnungen, die ein Ausführungsbeispiel wiedergeben, näher erläutert. Es zeigen:
- Fig. 1: ein Bohr- oder Meisselgerät mit einer aufgesetzten Absaugeinrichtung, die teilweise aufgeschnitten ist,
- Fig. 2: einen Schnitt durch das Gerät in Fig. 1 im Bereich des Sauggebläserades in vergrösserter Darstellung.

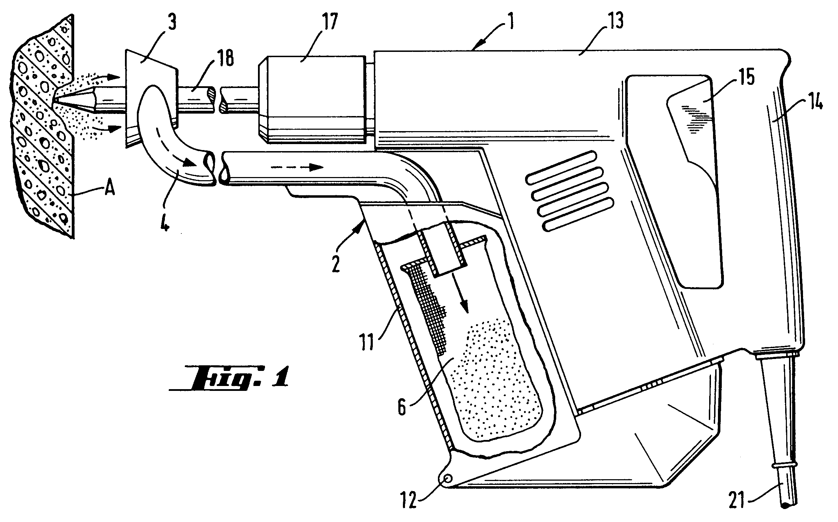

In der Fig. 1 ist ein handgeführtes Bohr- oder Meisselgerät 1 dargestellt. Das Gerät 1 weist ein Gehäuse 13 auf, das an der Rückseite in einen Gerätehandgriff 14 mündet. In dem Gerätehandgriff 14 ist ein mit einem Drücker 15 versehener Schalter eingebaut, über den das Bohr- oder Meisselgerät 1 in Betrieb gesetzt werden kann. Am unteren Ende des Gerätehandgriffes 14 ist durch eine elastische Tülle ein Stromzuleitungskabel 21 eingeführt. Am vorderen, dem Gerätehandgriff 14 abgewandten Ende ist am Bohr- oder Meisselgerät 1 ein Bohrfutter 17 angeordnet, welches zur Aufnahme von Bohr- oder Meisselwerkzeugen 18 dient.

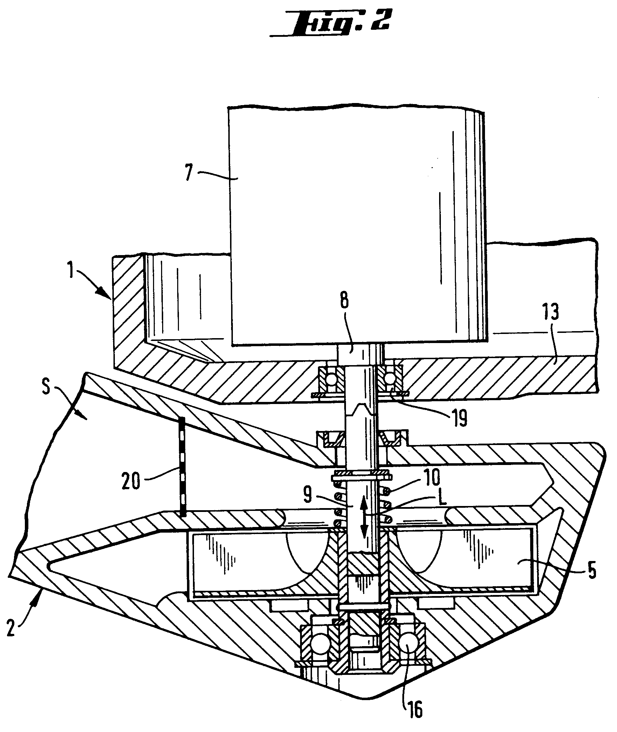

Eine Absaugeinrichtung 2 für das Bohrklein besteht aus einem Saugkopf 3, einer Saugleitung 4, einer Abscheideeinrichtung 6 und einem Sauggebläserad 5 (Fig. 2). Der Saugkopf 3 ist im Bearbeitungsbereich des Bohr- oder Meisselwerkzeugs 18 angeordnet. Die Saugleitung 4 verläuft grösstenteils parallel zur Längsrichtung des Werkzeuges 18 und mündet anschliessend im wesentlichen vertikal nach unten verlaufend in die Abscheideeinrichtung 6.

Das vom Bearbeitungswerkzeug 18 losgeschlagene Bohrklein wird von der Absaugeinrichtung 2 abgesaugt. Das Sauggebläserad 5 ist der Abscheideeinrichtung 6 nachgeschaltet und erzeugt einen Luftstrom, der das Bohrklein mit grosser Geschwindigkeit von der Bearbeitungsstelle durch den Saugkopf 3 und die Saugleitung 4 in die Abscheideeinrichtung 6 saugt.

Die Abscheideeinrichtung 6 kann zum Beispiel ein gesinterter Kunststoffilter mit faltenbalgähnlichen Wandungen sein, der starr ist und sich nicht zusammendrücken bzw auseinanderziehen lässt. Die faltenbalgähnlichen Wandungen bewirken eine grössere Filterfläche. Die Hüllkurve eines solchen Kunststoffilters kann rund oder mehreckig sein.

Eine weitere Ausführungsart der Abscheideeinrichtung 6 kann ein speziell mit z.B. Teflon beschichteter Papiersackfilter sein. Die Teflonbeschichtung ist dabei auf der bohrklein- bzw. staubberührenden Fläche angebracht. Durch diese Beschichtung kann der Staub nicht an der Wandung ankleben, sondern er fällt auf den Grund des Papiersackes. Somit kann eine gleichmässige Filterleistung erzielt werden.

Weitere Ausführungsarten der Abscheideeinrichtungen 6 können zum einen Stoffilter die aus Textilien hergestellt sind und zum anderen ganz normale Papiersackfilter sein, die meist aus mehreren Lagen Papier und Vlies, das zwischen diesen Lagen angeordnet ist, bestehen.

Die Abscheideeinrichtung 6 ist in einem eigens dafür vorgesehenen Hohlraum in der Absaugeinrichtung 2 angeordnet. Dieser Hohlraum ist über einen Deckel 11, der mittels eines Scharniers 12 aufgeklappt werden kann, zugänglich.

Die Fig. 2 zeigt im unteren Bereich des Gehäuses 13 einen elektrischen Antriebsmotor 7 mit einer Antriebswelle 8.

Die Antriebswelle 8 des Antriebsmotors 7 ragt im unteren Bereich aus dem Gehäuse 13 heraus. Koaxial zur Antriebswelle 8 des Antriebsmotors 7 ist eine Welle 9 für das Sauggebläserad 5 angeordnet.

Die Lagerung des Sauggebläserades 5 erfolgt einerseits auf der dem Antriebsmotor 7 des Gerätes 1 abgewandten Seite mittels eines Rillenkugellagers 16 und andererseits durch die Verbindung mit der Antriebswelle 8 des Antriebsmotors 7 über Lagerstellen 19 des Antriebsmotors 7.

Die in der Fig. 2 dargestellte Koppelungseinrichtung besteht im wesentlichen daraus, dass die Antriebswelle 8 des Antriebsmotors 7 eine schlitzförmige Ausnehmung hat, in die die Welle 9 des Sauggebläserades 5 mit einer klingenförmigen Erhöhung eingreift. Eine weitere Ausführungsart der Koppelung besteht aus verzahnten Stirnseiten beider Wellen 8, 9 die im Zentrum einen zapfenartigen, insbesondere zylindrischen, der Führung beider Wellen 8, 9 dienenden Vorsprung bzw eine den zapfenartigen Vorsprung aufnehmende Bohrung aufweisen. Die Welle 9 des Sauggebläserades 5 ist in ihrer Längsrichtung L axial verschiebbar.

Die Absaugeinrichtung 2 stellt in ihrer Gesamtheit eine Baueinheit dar, die lösbar mit dem Bohr- oder Meisselgerät 1 verbunden ist. Bei der Befestigung dieser Baueinheit kann es vorkommen, dass die an den Stirnseiten von Antriebswelle 8 und Welle 9 als Kupplungsklauen wirkenden Erhöhungen und Ausnehmungen in ihrer Lage zueinander nicht ausgerichtet sind. Die Welle 9 des Sauggebläserades 5 wird dabei in axialer Richtung, gegen eine Feder 10 drückend, verschoben. Nach dem Einschalten des Gerätes 1 können sich die Elemente der Koppelungseinrichtung zueinander ausrichten, wobei sich die Welle 9 in Richtung Antriebswelle 8 verschiebt, um somit eine formschlüssige Verbindung zu erreichen.

In dem Strömungskanal S zwischen Abscheideeinrichtung 6 und dem Sauggebläserad 5 befindet sich ein Sieb 20 in Form eines Bleches mit relativ grossen Bohrungen. Bei der Absaugung von Bohrklein ist es ohne weiteres möglich, dass relativ grosse spitzige oder scharfkantige Teile abgesaugt werden, die die Abscheideeinrichtung 6 so stark beschädigen, dass diese grösseren Teile des Bohrkleins zwischen die Schaufelräder des Sauggebläserades 5 gelangen können. Die weitere Folge ist ein Verklemmen des Sauggebläserades 5, was zur Beschädigung des Sauggebläserades 5 und der Koppelungseinrichtung führen könnte.

Um dieser ganzen Problematik weiter vorzubeugen, wird die axiale Verschiebbarkeit der Welle 9 des Sauggebläserades 5 dahingehend ausgenützt, dass die Koppelungseinrichtung als Drehmoment begrenzende Einrichtung funktioniert. Sollte sich aus irgend einem Grund das Saugebläserad 5 nicht mehr drehen können, so sind die konkaven bzw konvexen Teile der Wellen 8, 9 so ausgebildet, dass sich diese bei einem übersteigenden Drehmoment axial auseinanderbewegen und somit die formschlüssige Verbindung gelöst wird. Damit ist auf jeden Fall gewährleistet, dass dem Bohr- oder Meisselgerät 1 keine Beschädigungen durch das Sauggebläserad 5 zugefügt werden.

## Patentansprüche

1. Handgeführtes Bohr- oder Meisselgerät (1) mit Antriebsmotor (7) sowie mit Absaugeinrichtung (2) für das Bohrklein mit Saugkopf (3), Saugleitung (4), Sauggebläserad (5) und Abscheideeinrichtung (6), wobei die Absaugeinrichtung (2) als Baueinheit ausgebildet ist und mit dem Gerät (1) lösbar verbunden ist, **dadurch gekennzeichnet,** dass das Sauggebläserad (5) der Absaugeinrichtung (2) zur Koppelung mit dem Antriebsmotor (7) eine mit der Antriebswelle (8) des Antriebsmotors (7) direkt koppelbare Welle (9) aufweist, wobei die Welle (9) vom Saugebläserad (5) und die Antriebswelle (8) des Antriebsmotors (7) zueinander koaxial angeordnet sind.

2. Gerät nach Anspruch 1, dadurch gekennzeichnet, dass die Welle (9) des Sauggebläserades (5) axial verschiebbar ist.

3. Gerät nach Anspruch 2, dadurch gekennzeichnet, dass ein die Welle (9) des Sauggebläserades gegen die Antriebswelle (8) des Antriebsmotors (7) treibendes, krafterzeugendes Element (10) vorgesehen ist.

## Claims

1. Handheld Drilling or Chiselling apparatus (1) comprising a drive motor (7) and a suction device (2) for drilling chips, including a suction head (3), suction pipe (4), suction-blower wheel (5) and separating device (6), in and that the suction device (2) is an assembly unit which is releasably connected to the apparatus (1), **characterised in that** the suction-blower wheel (5) of the suction device (2) comprises a shaft (9) which is directly connectable to the driveshaft (8) of the drive motor (7) for the purpose of connecting to the drive motor (7), wherein the shaft (9) from the suction-blower wheel (5) and the driveshaft (8) of the drive motor (7) are arranged coaxially to each other.

2. Apparatus according to claim 1, characterised in that the shaft (9) of the suction-blower wheel (5) is axially displaceable.

3. Apparatus according to claim 2, characterised in that a power producing element (10) is provided which drives the shaft (9) of the suction-blower wheel towards the driveshaft (8) of the drive motor.

## Revendications

1. Outil perforateur-burineur à main (1), comprenant un moteur d'entraînement (7) et un aspirateur (2) pour les déchets de forage, avec une tête aspirante (3), une conduite d'aspirateur (4), une roue de ventilateur aspirant (5) et un dispositif collecteur (6), l'aspirateur (2) étant conçu comme unité constructive et assemblé de manière amovible à l'outil (1), **caractérisé en ce que** la roue de ventilateur aspirant (5) de l'aspirateur (2) présente, en vue de son couplage avec le moteur d'entraînement (7), un arbre (9) qui peut être directement, couplé à l'arbre de transmission (8) du moteur d'entraînement (7), et que l'arbre (9) de la roue de ventilateur aspirant (5) et l'arbre de transmission (8) du moteur d'entraînement (7) sont disposés coaxialement.

2. Outil selon la revendication 1, caractérisé en ce que l'abre (9) de la roue de ventilateur aspirant (5) peut être déplacé en translation axiale.

3. Outil selon la revendication 2, caractérisé en ce qu'est prévu un élément (10) produisant une force, qui pousse l'arbre (9) de la roue de ventilateur aspirant contre l'arbre de transmission (8) du moteur d'entraînement (7).
